# EUROPÄISCHE PATENTSCHRIFT

(11) **EP 3 113 977 B1**
(45) Veröffentlichungstag und Bekanntmachung des Hinweises auf die Patenterteilung: **11.04.2018**
(21) Anmeldenummer: 15707906.2
(22) Anmeldetag: 26.02.2015
(51) Int. Cl.: B60N 3/00

(54) **FAHRZEUG MIT EINER FAHRERASSISTENZVORRICHTUNG**
VEHICLE WITH A DRIVER ASSISTANCE SYSTEM
VÉHICULE AVEC UN DISPOSITIF D'AIDE À LA CONDUITE

(30) Priorität: 07.03.2014 DE 102014003023
(43) Veröffentlichungstag der Anmeldung: 11.01.2017
(73) Patentinhaber: Volkswagen Aktiengesellschaft, 38440 Wolfsburg (DE)
(72) Erfinder: BENDEWALD, Lennart, 38442 Wolfsburg (DE); HACKENBERG, Linn, 38448 Wolfsburg (DE); STRASDAT, Björn, 38106 Braunschweig (DE); REX, Valentin, 52074 Aachen (DE)
(86) Internationale Anmeldenummer: PCT/EP2015/053986
(87) Internationale Veröffentlichungsnummer: WO 2015/132119

(56) Entgegenhaltungen:
- DE-A1- 19 906 052
- DE-A1-102009 048 954
- US-B1- 8 260 482
- Paul A. Eisenstein: "Rinspeed Goes Autonomous with XchangE | TheDetroitBureau.com", The Detroit Bureau, 19 December 2013 (2013-12-19), XP055415060, WWW Retrieved from the Internet: URL:http://www.thedetroitbureau.com/2013/1 2/rinspeed-goes-autonomous-with-xchange/ [retrieved on 2017-10-12]

## Beschreibung

Die Erfindung betrifft ein Fahrzeug mit einer Fahrerassistenzvorrichtung nach dem Oberbegriff des Patentanspruches 1, das in einem Autopilot-Modus arbeiten kann. Zudem betrifft die Erfindung ein Verfahren zum Betreiben eines Fahrzeuges in einem solchen Autopilot-Modus.

Es sind Fahrerassistenzsysteme bekannt, die zumindest teilweise oder vollständig einen autonomen Fahrbetrieb ermöglichen, bei dem der Fahrer einen hohen Freiheitsgrad im Hinblick auf Tätigkeiten während des autonomen Fahrbetriebes hat. In der vorliegenden Anmeldung wird unter einem autonomen Fahrbetrieb das zumindest teilweise oder vollständig selbstständige, von Assistenzsystemen unterstützte Fahren eines Fahrzeuges verstanden. Derartige Assistenzsysteme übernehmen hierbei das Steuern der Längs- und Querdynamik des Fahrzeugs, das Beschleunigungs-, Brems- und/oder Lenkvorgänge. Aus der DE 10 2009 048 954 A1 ist ein Fahrzeug mit einer solchen Fahrerassistenzvorrichtung bekannt, mit der in einem Autopilot-Modus ein solcher autonomer Fahrbetrieb ohne Fahrereingriff durchführbar ist.

Zudem weisen Fahrzeuge in gängiger Praxis eine Vielzahl von Ablagemöglichkeiten im Fahrzeuginnenraum auf, zum Beispiel Staufächer, Ablagen oder Tische. Beispielhaft wird auf die DE 199 06 052 A1 verwiesen, aus der eine Ablagevorrichtung in einer Instrumententafel eines Kraftfahrzeuges bekannt ist. Die Ablagevorrichtung ist als eine Schublade ausgebildet, die in der Instrumententafel ein- und ausschiebbar gehaltert ist. Darüber hinaus sind generell unterschiedliche Arten von Tischkonzepten bekannt. Tische und Ablagen können beispielhaft an der Rückseite der Vordersitze angebracht, um die Arbeit mit zum Beispiel Laptops zu vereinfachen. Alternativ dazu können Tische zentral im Fondbereich des Fahrzeuges bereitgestellt werden, die von mehreren Personen gleichzeitig genutzt werden können.

Die US 8 260 482 B1 beschreibt ein Fahrzeug, umfassend eine Mehrzahl von Steuervorrichtungen einschließlich einer Bremsvorrichtung, einer Beschleunigungsvorrichtung und einer Lenkvorrichtung; ferner eine geographische Positionskomponente, um die aktuelle geographische Position des Fahrzeugs zu bestimmen; ferner ein Krafteingabegerät, um die ungefähre Position und Stärke einer Kraft zu identifizieren; ferner eine Speichereinrichtung, um detaillierte Karteninformationen einschließlich Verkehrswegen, Verkehrssignalen und Kreuzungsinformationen zu speichern. Außerdem umfasst das Fahrzeug eine Prozessoreinrichtung, die folgendermaßen betreibbar ist: Empfangen von Positionsinformationen von der geographischen Positionskomponente; Empfangen eines Eingangssignals von dem Krafteingabegerät; Bestimmen der aktuellen geographischen Position des Fahrzeugs aufgrund von Positionsinformationen von der geographischen Positionskomponente und den gespeicherten Karteninformationen; Feststellen, basierend auf der aktuellen geographischen Position des Fahrzeugs, ob die Prozessoreinrichtung die Mehrzahl von Steuervorrichtungen sicher steuern kann; und Bestimmen, basierend auf einem von dem Krafteingabegerät erhaltenen Eingangssignal, ob die Prozessoreinrichtung zur Steuerung der Mehrzahl von Steuervorrichtungen berechtigt ist.

Die Aufgabe der Erfindung besteht darin, ein Fahrzeug bereitzustellen, bei dem die Funktionalität an sich bekannter Ablageelemente speziell bei aktiviertem Autopilot-Modus gesteigert werden kann.

Die Aufgabe ist durch die Merkmale des Patentanspruches 1 gelöst. Bevorzugte Weiterbildungen der Erfindung sind in den Unteransprüchen offenbart.

Die Erfindung beruht auf der Grundidee, dass bei einem Fahrbetrieb im Autopilot-Modus der Fahrer die Verkehrssituation nicht mehr dauerhaft überwachen muss und entsprechend Zeit für sonstige Tätigkeiten, zum Beispiel Lesen, Entspannen oder Nahrungsaufnahme hat. Vor diesem Hintergrund stellt die Erfindung ein adaptives Ablagekonzept bereit, das sich an die Nutzungserfordernisse speziell im autonomen Fahrbetrieb anpassen kann. So ist gemäß dem kennzeichnenden Teil des Patentanspruches 1 der Fahrerassistenzvorrichtung eine Steuereinheit zugeordnet, mit der bei aktiviertem Autopilot-Modus eine Verstellung des Ablageelementes in die Gebrauchsposition freigebbar ist. Bevorzugt ist die Gebrauchsposition im normalen Fahrbetrieb nicht von dem Ablageelement einnehmbar, um gegebenenfalls nicht mit dem Interaktionsraum des Fahrers zu interferieren. D.h. bei deaktiviertem Autopilot-Modus sperrt die Steuereinheit eine Verstellung in die Gebrauchsposition.

In einer technischen Realisierung kann das Ablageelement im normalen Fahrbetrieb mit Fahrereingriff, das heißt bei deaktiviertem Autopilot-Modus, in zumindest eine Gebrauchsposition verstellt werden. Demgegenüber kann das Ablagesystem bei aktiviertem Autopilot-Modus in eine davon unterschiedliche spezielle Autopilot-Gebrauchsposition verstellt werden.

Dem erfindungsgemäßen Ablageelement kann beispielhaft ein mehrstufiger Ein- und Ausfahrmechanismus zugeordnet sein, mit dem die verfügbare Ablagefläche des Ablageelementes variierbar ist. Der Ein- und Ausfahrmechanismus kann exemplarisch dreistufig ausgeführt sein, d.h. das Ablageelement kann ausgehend von seiner Nichtgebrauchsposition in eine erste Gebrauchsposition (erste Stufe), in eine zweite Gebrauchsposition (zweite Stufe) oder in die Autopilot-Gebrauchsposition (dritte Stufe) verstellt werden. In der ersten Stufe kann zum Beispiel lediglich ein Cupholder oder ein kleiner Bereich des Tisches freigegeben sein. In einer zweiten Stufe ist dagegen bereits eine größere Ablagefläche freigelegt. In der dritten Stufe kann das Ablageelement die größte Ablagefläche bereitstellen. Die dritte Stufe ist bevorzugt ausschließlich im Autopilot-Modus ansteuerbar, um die bereits oben angedeutete Störung des Interaktionsraumes des Fahrers (während des normalen Fahrbetriebs, d.h. bei deaktiviertem Autopilot-Modus) zu vermeiden.

Sofern eine fahrzeuginitiierte Rückholung (das heißt eine Abschaltung oder Deaktivierung des Autopilot-Modus) stattfinden, kann das Ablageelement automatisch (da heißt selbsttätig) von der oben erwähnten dritten Stufe in die zweite Stufe, in die erste Stufe oder in die Nichtgebrauchsposition rückgeführt werden. Zudem können Gewichts-, Lage- und Fahrerbeobachtungssensoren (zum Beispiel Innenraumkameras) bereitgestellt werden, die erfassen, ob sich Gegenstände auf dem Ablageelement befinden, die beim Verstellen des Ablageelementes verrutschen könnten. In einem solchen Fall kann z.B. das Einfahren des Ablageelementes in seine Nichtgebrauchsposition blockiert werden.

Nachfolgend sind weitere Merkmale der Erfindung beschrieben: Wie bereits oben erwähnt, kann die Steuereinheit bei aktiviertem Autopilot-Modul ausschließlich eine Verstellung des Ablageelementes zumindest in die Autopilot-Gebrauchsposition (oben als dritte Stufe bezeichnet) freigeben. Zudem kann die Steuereinheit bei deaktiviertem Autopilot-Modus eine solche Verstellung des Ablageelementes in die Autopilot-Gebrauchsposition sperren.

Generell kann der Verstellvorgang des Ablageelementes in die Gebrauchspositionen oder in die Autopilot-Gebrauchsposition manuell oder mittels Fremdenergie, das heißt zum Beispiel mittels eines elektrisch ansteuerbaren Aktuators, erfolgen. In diesem Fall kann der Verstellvorgang des Ablageelementes in eine Gebrauchsposition zum Beispiel durch Betätigung eines Bedienelementes eingeleitet werden. Im Hinblick auf einen gesteigerten Komfort ist es jedoch besonders bevorzugt, wenn sich bei Aktivierung des Autopilot-Modus das Ablageelement selbsttätig in die Autopilot-Gebrauchsposition verstellt, ohne dass hierzu ein Fahrereingriff (etwa Betätigung eines Bedienelements) erforderlich ist.

Das Ablageelement kann an beliebiger Stelle im Fahrzeuginnenraum angeordnet sein, zum Beispiel an der Instrumententafel, an der Mittelkonsole und/oder an der Seitenverkleidung. Zudem kann die Verstellung des Ablageelementes zwischen der Nichtgebrauchsposition und den unterschiedlichen Gebrauchspositionen translatorisch und/oder rotatorisch in der Fahrzeuglängs-, -quer -und/oder -hochrichtung durchgeführt werden, je nach Bauraumverhältnisse.

Zur weiteren Komfortsteigerung kann die Fahrerassistenzvorrichtung eine weitere Steuereinheit zur Ansteuerung zumindest eines Fahrzeugsitzes aufweisen. Mit der Fahrzeugsitz-Steuereinheit kann bei Aktivierung des Autopilot-Modus ein Fahrzeugsitz, insbesondere der Fahrersitz, in eine Komfortstellung verstellt werden. Bevorzugt kann die Verlagerung in die Komfortstellung automatisch erfolgen. Im Hinblick auf die Fahrzeugsicherheit kann die Verlagerung des Fahrzeugsitzes in die Komfortstellung ausschließlich bei aktiviertem Autopilot-Modus durchgeführt werden und ist die Verlagerung in die Komfortstellung bei deaktiviertem Autopilot-Modus gesperrt.

In einer bevorzugten Ausführungsvariante kann das Ablageelement und der Fahrersitz zu einer gemeinsamen Komforteinheit zusammengefasst sein. In der Komforteinheit kann sich das Ablageelement bei Aktivierung des Autopilot-Modus adaptiv an die Komfortstellung des Fahrzeugsitzes anpassen. Vor diesem Hintergrund kann z.B. eine Verstellung des Ablageelementes in seine Autopilot-Gebrauchsposition erst dann freigegeben werden, wenn sowohl der Autopilot-Modus aktiviert ist als auch der Fahrzeugsitz bereits in seine Komfortstellung verstellt ist.

Bevorzugt erfolgt die Verlagerung des Fahrzeugsitzes in seine Komfortstellung unmittelbar bei Aktivierung des Autopilot-Modus selbsttätig, ohne dass hierzu zusätzliche Bedienelemente manuell zu bedienen sind. Alternativ kann bei Aktivierung des Autopilot-Modus sowohl das Ablageelement in die Autopilot-Gebrauchsposition verstellt werden als auch der Fahrzeugsitz in seine Komfortstellung verstellt werden. Die beiden Verstellvorgänge sind bevorzugt aufeinander abgestimmt und können z.B. selbsttätig und zeitlich zusammenhängend, d.h. im Wesentlichen gleichzeitig, erfolgen.

Bei einer Deaktivierung des Autopilot-Modus bzw. unmittelbar vor einer solchen Deaktivierung ist es von Vorteil, wenn das Ablageelement selbsttätig von seiner Autopilot-Gebrauchsposition wieder in eine normale Gebrauchsposition oder in die Nichtgebrauchsposition rückgestellt wird. In gleicher Weise kann auch der Fahrzeugsitz von seiner Komfortstellung selbsttätig wieder in eine für den Fahrer fahrtaugliche Stellung verlagert werden.

Das Ablageelement kann in beliebiger Weise ausgeführt sein. Beispielhaft kann das Ablageelement ein verstellbarer Tisch sein, auf dessen Oberseite eine zusätzlich verschiebbare Ablageschale angeordnet ist. Die Ablageschale kann abnehmbar und damit abwaschbar gestaltet werden. Für eine einfache Halterung auf dem Tisch kann die Ablageschale beispielhaft durch Magnetkraft gehaltert werden. In diesem Fall kann die Ablageschale mit Magnetelementen und/oder einer Metallbeschichtung ausgeführt sein.

Der oben erwähnte verstellbare Tisch kann zusätzlich als eine interaktive Fläche dienen und beispielsweise aufgelegte Smartphones induktiv aufladen oder per NFC deren Inhalte auf die fahrzeugseitige Head-Unit übertragen.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen, sofern der Gegenstand dieser Weiterbildungen innerhalb des Schutzbereiches der Ansprüche liegt. Die Erfindung und ihre vorteilhaften Aus- und Weiterbildungen sowie deren Vorteile werden nachfolgend anhand von Zeichnungen näher erläutert.

Es zeigen:
- Fig. 1a: in einem Blockschaltdiagramm eine Fahrerassistenzvorrichtung in einem Fahrzeug gemäß einem ersten Ausführungsbeispiel;
- Fig. 1b: in einer Ansicht entsprechend der Fig. 1a eine Fahrerassistenzvorrichtung gemäß einem zweiten Ausführungsbeispiel;
- Fig. 2 bis 4: unterschiedliche Gebrauchspositionen des Ablageelementes;
- Fig. 5 bis 7: ein als Tisch ausgeführtes Ablageelement in unterschiedlichen Gebrauchspositionen; und
- Fig. 8 bis 16: jeweils unterschiedliche technische Realisierungen des Ablageelementes.

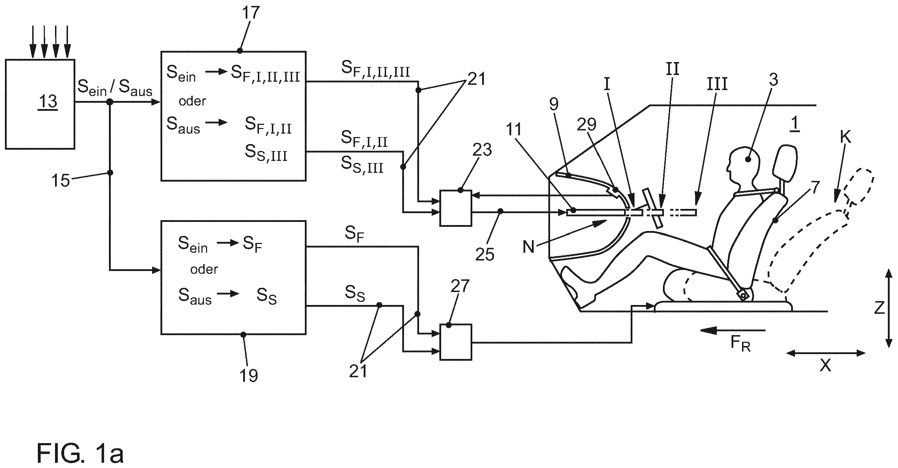

In der Fig. 1a ist beispielhaft ein durch Konturlinien begrenzter Fahrzeuginnenraum 1 eines Kraftfahrzeuges gezeigt. In dem Fahrzeuginnenraum 1 ist ein an einem Fahrzeugsitz 7 angegurteter Fahrer 3 sowie ein Blockschaltdiagramm eines Fahrerassistenzsystems angedeutet. Die Funktionsblöcke des Fahrerassistenzsystems sowie der Fahrzeuginnenraum 1 sind im Hinblick auf ein einfaches Verständnis der Erfindung angefertigt. Von daher zeigt die Fig. 1a lediglich eine grob vereinfachte Darstellung, die keinen realitätsgetreuen Aufbau des Fahrerassistenzsystems wiedergibt.

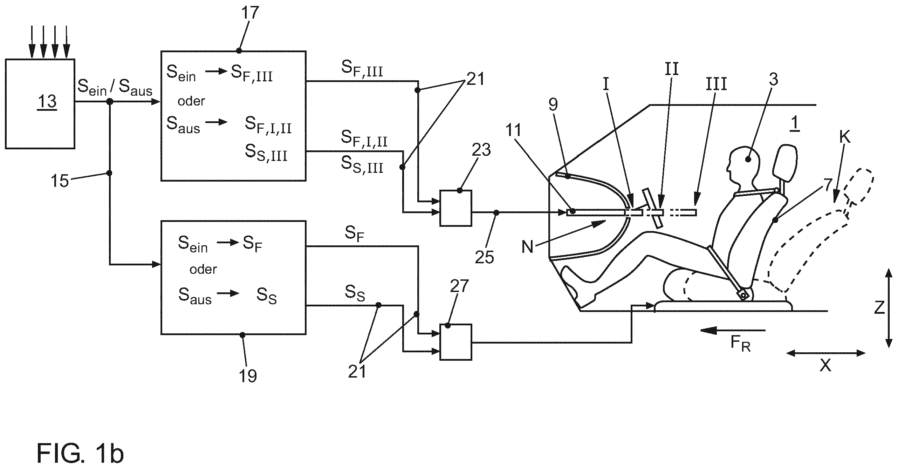

In dem Fahrzeuginnenraum 1 ist der Fahrer 3 in der Fahrtrichtung F_{R} nach vorne durch eine Instrumententafel 9 begrenzt. In der Instrumententafel 9 ist als ein beispielhaftes Ablageelement ein Ablagetisch 11 integriert. Dieser ist in der Fig. 1a horizontal in der Fahrzeuglängsrichtung x verstellbar. Der Ablagetisch 11 ist in der Fig. 1 in seiner Nichtgebrauchsposition N gezeigt, in der er vollständig sichtgeschützt innerhalb der Instrumententafel 9 angeordnet ist. Ausgehend von seiner Nichtgebrauchsposition N ist der Ablagetisch 11 in eine erste Gebrauchsposition I, eine zweite Gebrauchsposition II sowie eine Autopilot-Gebrauchsposition III verstellbar.

In den, in der Fig. 1a durch strichpunktierte Linien angedeuteten Gebrauchspositionen I, II, III ragt der Ablagetisch 11 mit unterschiedlichen Überständen aus der Instrumententafel 9 vor. Zudem kann auch der Fahrzeugsitz 7 ausgehend von der mit durchgezogenen Linien gezeigte Position in eine Komfortstellung K (mit gestrichelten Linien angedeutet) verstellt werden, in der die Sitzfläche in der Fahrzeuglängsrichtung x nach hinten verlagert ist und die Rückenlehne des Fahrzeugsitzes 7 ebenfalls nach hinten geneigt ist.

Der Ablagetisch 11 und der Fahrersitz 7 bilden eine Komforteinheit, in der gemäß der Fig. 1 sowohl der Ablagetisch 11 als auch der Fahrzeugsitz 7 in Signalverbindung mit einer Fahrerassistenzvorrichtung 13 ist. Die Fahrerassistenzvorrichtung 13 kann in Abhängigkeit von nicht näher spezifizierten Eingangsparametern das Fahrzeug in einem Autopilot-Modus betreiben, in dem ein autonomer Fahrbetrieb ohne Fahrereingriff ermöglicht ist. In diesem Fall übernimmt die Fahrerassistenzvorrichtung 13 das Steuern der Längs- und Querdynamik des Fahrzeugs, das heißt Beschleunigungs-, Brems- und/oder Lenkvorgänge.

Die Fahrerassistenzvorrichtung 13 ist über Signalleitungen 15 in Verbindung mit Steuereinheiten 17, 19 zur Ansteuerung des Ablagetisches 11 und des Fahrzeugsitzes 7. In der Ablagetisch-Steuereinheit 17 wird anhand der von der Fahrerassistenzvorrichtung 13 kommenden Signale Sₑᵢₙ oder Sₐᵤₛ erfasst, ob der Autopilot-Modus aktiviert oder deaktiviert ist. Bei aktiviertem Autopilot-Modus wird das Signal Sₑᵢₙ erfasst, bei deaktiviertem Autopilot-Modus wird das Signal Sₐᵤₛ erfasst. Die Steuereinheit 17 ist über Steuerleitungen 21 mit einem Aktuator 23 verbunden, zum Beispiel einem Elektromotor, der in Antriebsverbindung 25 mit dem verstellbaren Ablagetisch 17 ist. Durch entsprechende Ansteuerung des Aktuators 23 kann der Ablagetisch 11 in seine unterschiedlichen Positionen N, I, II oder III verstellt werden. In gleicher Weise ist auch die Fahrersitz-Steuereinheit 19 mit einem Aktuator 27 des Fahrersitzes 7 verbunden, um eine Verlagerung des Fahrersitzes 7 in die Komfortstellung K zu ermöglichen.

Bei aktiviertem Autopilot-Modus generiert die Ablagetisch-Steuereinheit 17 in der Fig. 1a ein Freigabesignal S_{F,I,II,III}, mit dem der Aktuator 23 ansteuerbar ist. Mit diesem Freigabesignal wird der Aktuator 23 freigeschaltet, um den Ablagetisch 11 optional in die erste Gebrauchsstellung I, in die zweite Gebrauchsstellung II oder in die Autopilot-Gebrauchsstellung III zu verstellen. Dem Fahrer 3 sind daher drei Verstelloptionen oder-möglichkeiten bereitgestellt, von denen er eine Option (d.h. Gebrauchsposition I, II oder III) durch Betätigung eines an der Instrumententafel 9 befindlichen Bedienelementes 29 auswählen kann. Das heißt, dass erst nach Betätigung des Bedienelementes 29 der Aktuator 23 den Ablagetisch 11 zu einer der freigeschalteten Gebrauchspositionen I, II oder zur Autopilot-Gebrauchsposition III verstellt.

Parallel dazu generiert die Fahrzeugsitz-Steuereinheit 19 bei aktiviertem Autopilot-Modus ein Freigabesignal S_{F}, auf dessen Grundlage der Aktuator 27 den Fahrzeugsitz 7 in seine Komfortstellung K verstellt.

Bei deaktiviertem Autopilot-Modus empfangen beide Steuereinheiten 17, 19 jeweils ein Signal Sₐᵤₛ. Auf dessen Grundlage wird in der Ablagetisch-Steuereinheit 17 ein Freigabesignal S_{F,I,II} und ein Sperrsignal S_{S,III} generiert. In diesem Fall wird in dem Aktuator 23 lediglich die die Verstelloption zur ersten oder zweiten Gebrauchsstellung I, II freigeschaltet. D.h. der Fahrer 3 hat durch Betätigung des Bedienelementes 29 lediglich die Auswahl zwischen der ersten und der zweiten Gebrauchsstellung I, II. Die Autopilot-Gebrauchsstellung III ist demgegenüber aufgrund des Sperrsignals S_{S,III} nicht freigeschaltet, sondern gesperrt. In gleicher Weise wird bei deaktiviertem Autopilot-Modus der Aktuator 23 freigeschaltet dem Fahrer die Auswahl zwischen der Gebrauchsstellung I, der Gebrauchsstellung II und der Gebrauchsstellung III bereitgestellt. Entsprechend kann der Fahrer 3 in der Fahrzeugsitz-Steuereinheit 19 ein Sperrsignal S_{S} generiert, mit dem eine Verlagerung des Fahrersitzes 7 in die Komfortstellung K blockiert ist.

Für den Fall, dass bei noch aktiviertem Autopilot-Modus eine fahrzeuginitiierte Rückholung stattfindet, das heißt, der Fahrer 3 also die Steuerung des Fahrzeugs wieder selbst übernehmen muss, wird sowohl der Ablagetisch 11 in seine Gebrauchsstellung I, II oder in seine Nichtgebrauchsstellung N rückgestellt. Gleichzeitig wird auch der Fahrersitz 7 von seiner Komfortstellung K in eine für den Fahrer 3 betriebstaugliche Stellung rückgeführt.

In der Fig. 1a ist ein zweites Ausführungsbeispiel gezeigt, dessen grundsätzlicher Aufbau sowie Funktionsweise weitgehend dem ersten Ausführungsbeispiel gemäß der Fig. 1a entspricht. Wie in der Fig. 1a werden auch in der Fig. 1b auf der Grundlage der Signale Sₑᵢₙ oder Sₐᵤₛ die Aktuatoren 23, 27 mittels Freigabe- oder Sperrsignale angesteuert. Insoweit wird auf die Vorbeschreibung verwiesen.

Im Unterschied zur Fig. 1a wird bei aktiviertem Autopilot-Modus in der Ablagetisch-Steuereinheit 17 ein Freigabesignal S_{F,III} aktiviert, mit dem der Aktuator 23 angesteuert wird. D.h., in der Fig. 1a wird bei aktiviertem Autopilot-Modus lediglich die Autopilot-Gebrauchsstellung III freigeschaltet, während die weiteren Gebrauchsstellungen I, II gesperrt bleiben. Die Verstellung des Ablagetisches 11 in die Autopilot-Gebrauchsstellung III erfolgt in der Fig. 1b-im Gegensatz zur Fig. 1a- automatisch, d.h. ohne vorherige zusätzliche Betätigung des Bedienelements 29 (Fig. 1a).

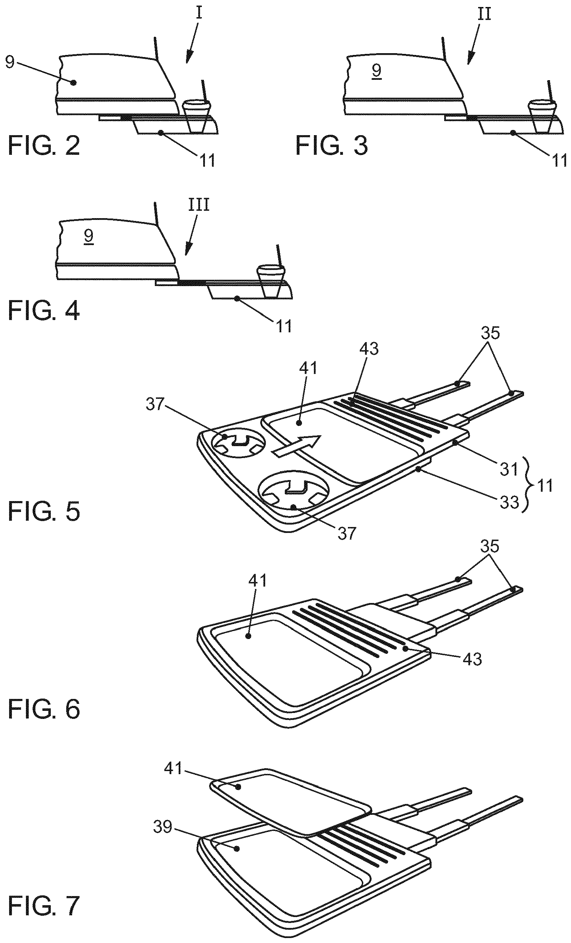

In den Fig. 2 bis 4 sind die beiden Gebrauchsstellungen I, II sowie die Autopilot-Gebrauchsstellung III dargestellt. Demzufolge ist in der Gebrauchsstellung I (Fig. 2) der Ablagetisch 11 lediglich mit einem geringfügigen Überstand aus der Instrumententafel 9 herausgefahren, so dass lediglich ein Cupholder freigelegt ist. In der Gebrauchslage II (Fig. 3) ist dagegen zusätzlich zur Cupholder-Funktion eine weitere Ablagemöglichkeit freigelegt. In der Autopilot-Gebrauchsposition III (Fig. 4) ist der Ablagetisch 11 mit größtmöglichem Überstand aus der Instrumententafel 9 herausverlagert.

In den Fig. 5 bis 7 ist eine beispielhafte Ausführung des verstellbaren Ablagetisches 11 in unterschiedlichen Funktionslagen dargestellt. Gemäß der Fig. 5 weist der Ablagetisch 11 eine obere und eine untere Tragplatte 31, 33 auf. Die obere Tragplatte 31 ist über Teleskopschienen 35 mit der Instrumententafel 9 in Verbindung. Die untere Tragplatte 33 ist an der Unterseite der oberen Tragplatte 31 längsverschiebbar (siehe Pfeil aus der Fig. 5) gehaltert. So ist die untere Tragplatte 33 in der Fig. 5 in ausgefahrener Position gezeigt, in der die integrierten Cupholder 37 freigelegt sind. In der oberen Tragplatte 31 ist oberseitig eine großflächige, wannenförmige Vertiefung 39 eingearbeitet, in der eine Ablageschale 41 lösbar, zum Beispiel über Magnetkraft, gehaltert ist. Zwischen der Ablageschale 41 und den Teleskopschienen 35 weist die obere Tragplatte 31 eine zusätzliche Ablagefläche 43 auf.

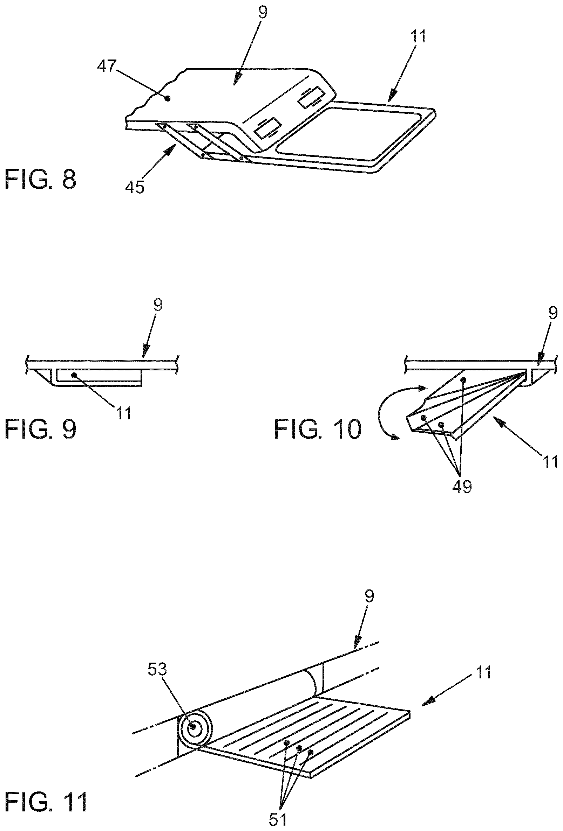

In den folgenden Fig. 8 bis 16 sind weitere Ausführungsvarianten des Ablageelementes 11 gezeigt. So ist in der Fig. 8 der Ablagetisch 11 nicht mehr alleine translatorisch mittels Teleskopschienen 35 verschiebbar, sondern mittels eines Viergelenks 45 an einem Tragabschnitt 47 der Instrumententafel 9 angelegt. Die Verstellung zwischen der Nichtgebrauchslage und der Gebrauchslage erfolgt somit durch eine Kombination einer rotatorischen und einer translatorischen Bewegung.

In der Fig. 9 und 10 ist der Ablagetisch 11 nicht mehr mit einer bauteilsteifen Tragplatte ausgeführt, sondern vielmehr als ein Fächer, der in der Fig. 10 beispielhaft in dreieckförmige Segmente 49 unterteilt ist. Die dreieckförmigen Segmente 49 sind verformbar bzw. faltbar ausgelegt, wodurch der Ablagetisch 11 in der Nichtgebrauchslage (Fig. 9) bauraumgünstig in der Instrumententafel 9 verstaubar ist.

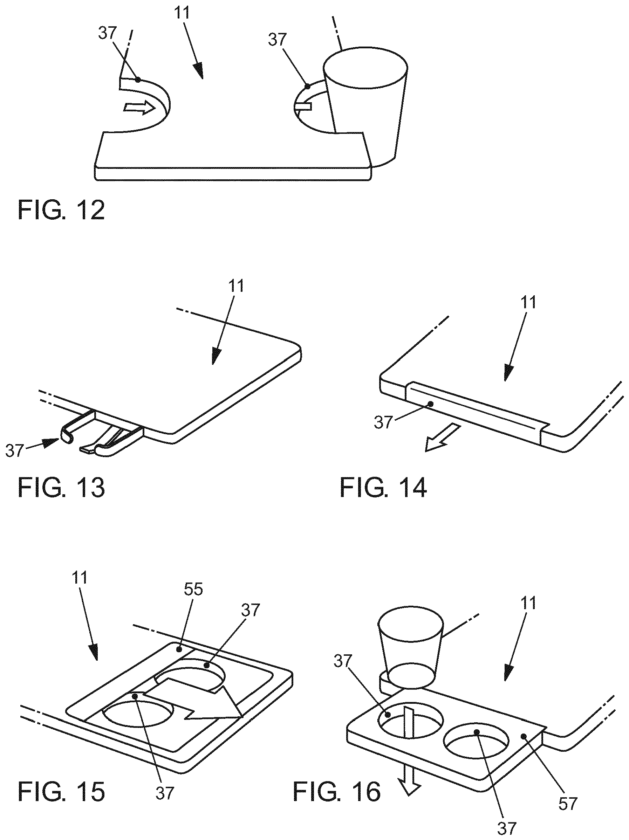

In der Fig. 11 ist der Ablagetisch 11 nach Art eines Rollos aufgebaut, das ebenfalls Einzelsegmente 51 aufweist, die an einer Aufwickeleinrichtung 53 auf- oder abwickelbar sind. In der Fig. 12 und 13 ist der Ablagetisch 11 als bauteilsteife Tragplatte ausgeführt, in der die Cupholder 37 als Aussparungen randseitig im Ablagetisch 11 integriert sind (Fig. 12). Alternativ dazu ist in der Fig. 13 der Cupholder 37 durch, gegebenenfalls elastisch verformbare Einzelarme randseitig am Ablagetisch 11 ausgebildet.

In der Fig. 14 ist der Cupholder 37 ebenfalls verstellbar angeordnet und in Pfeilrichtung aus dem Ablagetisch 11 herausziehbar. In der Fig. 15 sind beispielhaft zwei Cupholder 37 als kreisförmige Aussparungen in dem Ablagetisch 11 integriert und mittels einer verstellbaren Abdeckung 55 überdeckbar. In der Fig. 16 ist der Ablagetisch 11 an einer Randseite durch eine zusätzliche Tragplatte 57 verlängert, in der die Cupholder 37 als kreisförmige Aussparungen integriert sind.

## Patentansprüche

1. Fahrzeug mit einer Fahrerassistenzvorrichtung (13), mit der in einem Autopilot-Modus ein autonomer Fahrbetrieb ohne Fahrereingriff durchführbar ist, und mit zumindest einem Ablageelement (11) zur Ablage von Gegenständen, etwa ein Cupholder und/oder ein Ablagetisch, der zwischen einer Nichtgebrauchsposition (N) und zumindest einer Gebrauchsposition (III) verstellbar ist, **dadurch gekennzeichnet, dass** der Fahrerassistenzvorrichtung (13) eine Steuereinheit (17) zugeordnet ist, die bei aktiviertem Autopilot-Modus eine Verstellung des Ablageelements (11) in Gebrauchsposition (III) freigibt und bei deaktiviertem Autopilot-Modus eine Verstellung des Ablageelements (11) in die Gebrauchsposition (III) sperrt.

2. Fahrzeug nach Anspruch 1, **dadurch gekennzeichnet, dass** die Gebrauchsposition (III) des Ablageelements (11) eine Autopilot-Gebrauchsposition ist, und dass neben der Autopilot-Gebrauchsposition zusätzlich noch zumindest eine weitere, davon unterschiedliche Gebrauchsposition (I, II) des Ablageelements (11) bereitstellbar ist.

3. Fahrzeug nach Anspruch 2, **dadurch gekennzeichnet, dass** die Steuereinheit (17) bei aktiviertem Autopilot-Modus zusätzlich zur Verstellung in die Autopilot-Gebrauchsposition (III) auch die Verstellung in die weitere Gebrauchsposition (I, II) freigibt, und/oder dass die Steuereinheit (17) bei deaktiviertem Autopilot-Modus die Verstellung des Ablageelements (11) in die weitere Gebrauchsposition (I, II) freigibt.

4. Fahrzeug nach einem der vorhergehenden Ansprüche, **dadurch gekennzeichnet, dass** die Verstellung des Ablageelements (11) in die Gebrauchsposition (I, II, III) manuell oder mittels Fremdenergie erfolgt, etwa einem elektromechanischen oder hydraulischen Aktuator (23), und/oder dass die Verstellung des Ablageelements (11) in die Gebrauchsposition (I, II, III) durch Betätigung eines Bedienelements (29) initiierbar ist.

5. Fahrzeug nach einem der vorhergehenden Ansprüche, **dadurch gekennzeichnet, dass** bei Aktivierung des Autopilot-Modus das Ablageelement (11) selbsttätig in die Gebrauchsposition (III) verstellbar ist.

6. Fahrzeug nach einem der vorhergehenden Ansprüche, **dadurch gekennzeichnet, dass** das Ablageelement (11) an beliebiger Stelle im Fahrzeuginnenraum (1) angeordnet ist, insbesondere an der Instrumententafel (9), an der Mittelkonsole und/oder an der Seitenverkleidung, und/oder dass die Verstellung des Ablageelements (11) zwischen der Nichtgebrauchsposition (N) und der Gebrauchsposition (I, II, III) translatorisch und/oder rotatorisch in Fahrzeuglängs-, -quer -und/oder -hochrichtung (x, y, z) durchführbar ist.

7. Fahrzeug nach einem der vorhergehenden Ansprüche, **dadurch gekennzeichnet, dass** der Fahrerassistenzvorrichtung (13) eine Steuereinheit (19) zugeordnet ist, mit der bei Aktivierung des Autopilot-Modus zumindest ein Fahrzeugsitz (7), insbesondere ein Fahrersitz, in eine Komfortstellung (K) verstellbar ist, und dass insbesondere bei deaktiviertem Autopilot-Modus die Steuereinheit (19) eine Verstellung des Fahrzeugsitzes (7) in die Komfortstellung (K) sperrt.

8. Fahrzeug nach Anspruch 7, **dadurch gekennzeichnet, dass** die Steuereinheit (19) die Verstellung des Ablageelements (11) in die Gebrauchsposition (III) erst freigibt, wenn sowohl der Autopilot-Modus aktiviert ist als auch der Fahrzeugsitz (7) in seine Komfortstellung (K) verstellt ist.

9. Fahrzeug nach Anspruch 7 oder 8, **dadurch gekennzeichnet, dass** bei Aktivierung des Autopilot-Modus der Fahrzeugsitz (7) selbsttätig in die Komfortstellung (K) verstellbar ist, und dass insbesondere das Ablageelement (11) und der Fahrzeugsitz (7) eine Komforteinheit bilden, in der bei Aktivierung des Autopilot-Modus sowohl das Ablageelement (11) in die Gebrauchsposition (III) verstellbar ist als auch der Fahrzeugsitz (7) in die Komfortstellung (K) verstellbar ist, und dass insbesondere die beiden Verstellvorgänge selbsttätig und zeitlich zusammenhängend, d.h. im Wesentlichen gleichzeitig, erfolgen.

10. Fahrzeug nach einem der vorhergehenden Ansprüche, **dadurch gekennzeichnet, dass** bei Deaktivierung des Autopilot-Modus das Ablageelement (11) selbsttätig von der Gebrauchsposition (III) in die zumindest eine weitere Gebrauchsposition (I, II) oder in die Nichtgebrauchsposition (N) rückstellbar ist, und/oder dass der Fahrzeugsitz (7) selbsttätig von seiner Komfortstellung (K) in eine für den Insassen fahrtaugliche Stellung verstellbar ist.

## Claims

1. Vehicle with a driver assistance device (13), with which an autonomous driving operation can be carried out without a driver intervention in an autopilot mode, and with at least one storage element (11) for storing objects, for example a cup holder and/or a storage table which can be adjusted between an out-of-use position (N) and at least one positon of use (III), **characterized in that** the driver assistance device (13) is assigned a control unit (17), which, when the autopilot mode is activated, releases adjustment of the storage element (11) into a position of use (III), and when the autopilot mode is deactivated blocks adjustment of the storage element (11) into the position of use (III).

2. Vehicle according to Claim 1, **characterized in that** the position of use (III) of the storage element (11) is an autopilot position of use, and **in that** in addition to the autopilot position of use at least one further position of use (I, II), different therefrom, of the storage element (11) can additionally be made available.

3. Vehicle according to Claim 2, **characterized in that** when the autopilot mode is activated the control unit (17) also releases, in addition to the adjustment into the autopilot position of use (III), the adjustment into the further position of use (I, II), and/or **in that** when the autopilot mode is deactivated the control unit (17) releases the adjustment of the storage element (11) into the further position of use (I, II).

4. Vehicle according to one of the preceding claims, **characterized in that** the adjustment of the storage element (11) into the position of use (I, II, III) takes place manually or by means of external energy, for example an electromechanical or hydraulic actuator (23), and/or **in that** the adjustment of the storage element (11) into the position of use (I, II, III) can be initiated by activating an operator control element (29).

5. Vehicle according to one of the preceding claims, **characterized in that** when the autopilot mode is activated, the storage element (11) can be adjusted automatically into the position of use (III).

6. Vehicle according to one of the preceding claims, **characterized in that** the storage element (11) is arranged at any desired location in the passenger compartment (1) of the vehicle, in particular on the instrument panel (9), on the centre console and/or on the side panelling, and/or **in that** the adjustment of the storage element (11) between the out-of-use position (N) and the position of use (I, II, III) can be carried out in a translational and/or rotational fashion in the longitudinal, transverse and/or vertical directions (x, y, z) of the vehicle.

7. Vehicle according to one of the preceding claims, **characterized in that** the driver assistance device (13) is assigned a control unit (19) with which, when the autopilot mode is activated, at least one vehicle seat (7), in particular a driver's seat, can be adjusted into a comfort position (K), and **in that**, in particular when the autopilot mode is deactivated, the control unit (19) blocks adjustment of the vehicle seat (7) into the comfort position (K).

8. Vehicle according to Claim 7, **characterized in that** the control unit (19) does not release the adjustment of the storage element (11) into the position of use (III) until both the autopilot mode is activated and the vehicle seat (7) is adjusted to its comfort position (K).

9. Vehicle according to Claim 7 or 8, **characterized in that** when the autopilot mode is activated, the vehicle seat (7) can be adjusted automatically into the comfort positon (K), and **in that**, in particular, the storage element (11) and the vehicle seat (7) form a comfort unit in which, when the autopilot mode is activated, both the storage element (11) can be adjusted into the position of use (III) and the vehicle seat (7) can be adjusted into the comfort positon (K), and **in that**, in particular, the two adjustment processes take place automatically and in a chronologically coherent fashion, i.e. essentially simultaneously.

10. Vehicle according to one of the preceding claims, **characterized in that** when the autopilot mode is deactivated, the storage element (11) can be returned automatically from the position of use (III) into the at least one further position of use (I, II) or into the out-of-use position (N), and/or **in that** the vehicle seat (7) can be adjusted automatically from its comfort positon (K) into a position which is suitable for driving for the vehicle occupant.

## Revendications

1. Véhicule comprenant un dispositif d'assistance au conducteur (13) qui permet de réaliser un régime de déplacement autonome sans intervention du conducteur dans un mode de pilotage automatique, et comprenant au moins un élément de rangement (11) servant à ranger des objets, par exemple un porte-gobelet et/ou une tablette vide-poches, qui peut être déplacé entre une position de non-utilisation (N) et au moins une position d'utilisation (III), **caractérisé en ce qu'**une unité de commande (17) est associée au dispositif d'assistance au conducteur (13), laquelle libère un positionnement de l'élément de rangement (11) dans la position d'utilisation (III) lorsque le mode de pilotage automatique est activé et bloque un positionnement de l'élément de rangement (11) dans la position d'utilisation (III) lorsque le mode de pilotage automatique est désactivé.

2. Véhicule selon la revendication 1, **caractérisé en ce que** la position d'utilisation (III) de l'élément de rangement (11) est une position d'utilisation du pilote automatique, et **en ce qu'**en plus de la position d'utilisation du pilote automatique, au moins une position d'utilisation supplémentaire (I, II) de l'élément de rangement (11), différente de celle-ci, peut être fournie.

3. Véhicule selon la revendication 2, **caractérisé en ce que** l'unité de commande (17), lorsque le mode de pilotage automatique est activé, en plus de la libération du positionnement dans la position d'utilisation du pilote automatique (III), libère également le positionnement dans la position d'utilisation supplémentaire (I, II), et/ou **en ce que** l'unité de commande (17), lorsque le mode de pilotage automatique est désactivé, libère le positionnement de l'élément de rangement (11) dans la position d'utilisation supplémentaire (I, II).

4. Véhicule selon l'une des revendications précédentes, **caractérisé en ce que** le positionnement de l'élément de rangement (11) dans la position d'utilisation (I, II, III) est effectué manuellement ou au moyen d'une énergie externe, par exemple un actionneur (23) électromécanique ou hydraulique, et/ou **en ce que** le positionnement de l'élément de rangement (11) dans la position d'utilisation (I, II, III) peut être initié en actionnant un élément de commande (29).

5. Véhicule selon l'une des revendications précédentes, **caractérisé en ce que** lors de l'activation du mode de pilotage automatique, l'élément de rangement (11) peut être positionné automatiquement dans la position d'utilisation (III).

6. Véhicule selon l'une des revendications précédentes, **caractérisé en ce que** l'élément de rangement (11) est disposé en un endroit quelconque dans l'espace intérieur du véhicule (1), notamment sur le tableau de bord (9), sur la console centrale et/ou sur le revêtement latéral, et/ou **en ce que** le positionnement de l'élément de rangement (11) entre la position de non-utilisation (N) et la position d'utilisation (I, II, III) peut être effectué par translation et/ou par rotation dans le sens longitudinal, transversal et/ou de la hauteur (x, y, z) du véhicule.

7. Véhicule selon l'une des revendications précédentes, **caractérisé en ce qu'**une unité de commande (19) est associée au dispositif d'assistance au conducteur (13), laquelle permet de positionner au moins un siège de véhicule (7), notamment un siège de conducteur, dans une position de confort (K) lorsque le mode de pilotage automatique est activé, et **en ce que** l'unité de commande (19) bloque un positionnement du siège de véhicule (7) dans la position de confort (K) notamment lorsque le mode de pilotage automatique est désactivé.

8. Véhicule selon la revendication 7, **caractérisé en ce que** l'unité de commande (19) ne libère le positionnement de l'élément de rangement (11) dans la position d'utilisation (III) que lorsqu'à la fois le mode de pilotage automatique est activé et le siège de véhicule (7) est positionné dans sa position de confort (K).

9. Véhicule selon la revendication 7 ou 8, **caractérisé en ce que** lorsque le mode de pilotage automatique est activé, le siège de véhicule (7) peut être positionné automatiquement dans la position de confort (K), et **en ce que** notamment l'élément de rangement (11) et le siège de véhicule (7) forment une unité de confort qui permet, lors de l'activation du mode de pilotage automatique, à la fois de positionner l'élément de rangement (11) dans la position d'utilisation (III) et de positionner le siège de véhicule (7) dans la position de confort (K), et **en ce que** les deux opérations de positionnement se déroulent notamment automatiquement et en cohérence temporelle, c'est-à-dire pour l'essentiel simultanément.

10. Véhicule selon l'une des revendications précédentes, **caractérisé en ce que** lors de la désactivation du mode de pilotage automatique, l'élément de rangement (11) peut revenir automatiquement de la position d'utilisation (III) dans l'au moins une position d'utilisation supplémentaire (I, II) ou dans la position de non-utilisation (N), et/ou **en ce que** le siège de véhicule (7) peut être positionné automatiquement de sa position de confort (K) dans une position d'aptitude à la conduite pour les occupants.
